Europäisches Patentamt

European Patent Office

Office européen des brevets

(19)

(11) Veröffentlichungsnummer: **0 136 705 B1**

(12) **EUROPÄISCHE PATENTSCHRIFT**

(45) Veröffentlichungstag der Patentschrift: 03.07.91

(51) Int. Cl.5: **A61G 5/02**, B62M 1/14

(21) Anmeldenummer: **84111812.8**

(22) Anmeldetag: **03.10.84**

(54) **Getriebe.**

(30) Priorität: **04.10.83 DE 3335998**

(43) Veröffentlichungstag der Anmeldung:
**10.04.85 Patentblatt 85/15**

(45) Bekanntmachung des Hinweises auf die
Patenterteilung:
**03.07.91 Patentblatt 91/27**

(84) Benannte Vertragsstaaten:
**BE FR GB SE**

(56) Entgegenhaltungen:
**EP-A- 0 004 205**
**DE-A- 2 629 839**
**US-A- 3 994 509**
**US-A- 4 453 729**

(73) Patentinhaber: **Meyra Wilhelm Meyer GmbH &
Co KG**
**Postfach 17 03**
**W-4973 Vlotho(DE)**

(72) Erfinder: **Seeliger, Klaus, Dipl.-Ing.**
**Birkenkopfstrasse 10**
**W-3500 Kassel(DE)**

(74) Vertreter: **Weber, Joachim et al**
**Hoefer, Schmitz, Weber, Patentanwälte**
**Ludwig-Ganghofer-Strasse 20**
**W-8022 Grünwald/München(DE)**

EP 0 136 705 B1

# Beschreibung

Die Erfindung bezieht sich auf ein Getriebe für muskelbetriebene Fahrzeuge oder Geräte nach dem Oberbegriff des Hauptanspruchs.

Ein derartiges Getriebe ist aus der US-A-3 994 509 bekannt, die einen Antriebsmechanismus für einen Rollstuhl zeigt, welcher so ausgebildet ist, daß Schwenkbewegungen des Antriebshebels zur Vorwärtsbewegung nutzbar sind, wobei jedoch im Übergang der Schwenkbewegungen ein Leerlauf zu überbrücken ist.

Um eine hin- und hergehende Bewegung in eine Drehbewegung konstanten Drehsinns umzuwandeln, sind aus EP-OS-0 0 040 205 und US-PS-3 301 574 Getriebe mit Rückwärtsgang bekannt, die mit richtungsumkehrbaren Richtgesperren arbeiten. Diese Getriebe besitzen jedoch den Nachteil, daß sie nur eine der beiden Antriebsbewegungen für die Drehbewegung des Antriebs ausnutzen und jeweils einen Leerhub in Kauf nehmen.

Aus der DE-A2-26 29 839 ist ein Freilaufmechanismus für einen Rollstuhl vorbekannt, bei welchem ebenfalls nur der eine Hub des Handhebels für die Bewegung des Rollstuhls genutzt werden kann, während der jeweilige Rückhub zum Antrieb des Rollstuhls nicht beiträgt.

Der Erfindung liegt die Aufgabe zugrunde, ein Getriebe der eingangs genannten Art zu schaffen, welches klein und leicht ausgebildet ist, bei welchem beide Hubbewegungen eines Handhebels für die Vorwärtsbewegung ausgenutzt werden können, ohne einen Leerlauf überbrücken zu müssen und welches unter Verwendung zumindest eines der beiden Hübe des Handhebels alternativ eine Rückwärtsgangbewegung ermöglicht.

Diese Aufgabe wird bei einem Getriebe gemäß dem Oberbegriff des Hauptanspruches dadurch gelöst, daß mindestens ein dritter Freilauf, welcher zu den ersten beiden Freiläufen gegensinnig wirkend ausgebildet ist, zugleich mit den ersten beiden Freiläufen angetrieben wird, und daß mittels einer Kupplungseinrichtung entweder die gleichsinnigen Freiläufe für den Vorwärtsgang, oder der dritte, gegensinnige Freilauf für den Rückwärtsgang oder im Leerlauf keiner der drei Freiläufe in Antriebsverbindung mit der Welle bringbar sind.

Neben den beiden ersten und zweiten Freiläufen gleichen Drehsinns, die dem Vorwärtsgang dienen, ist somit, noch mindestens ein weiterer, dritter Freilauf angeordnet, der einen gegenläufigen Drehsinn hat. Alle Freiläufe wirken nicht direkt auf die Antriebswelle, sondern die beiden ersten und zweiten Freiläufe gleichen Drehsinns wirken auf einen für den Vorwärtsgang bestimmten Innenring und der gegenläufige dritte Freilauf wirkt auf einen für den Rückwärtsgang als Rückwärtshülse ausgebildeten Innenring ein. Beide Innenringe können mittels Schaltverzahnungen wahlweise mit einer Hohlwelle als Antriebswelle gekoppelt sein oder im Leerlauf ungekoppelt mit der Hohlwelle bleiben.

Erfindungsgemäß sind sämtliche Freiläufe, d. h. sowohl die Freiläufe für die Vorwärtsbewegung als auch der Freilauf für den Rückwärtsgang bei einer Verschwenkung des Betätigungshebels in Bewegung, das heißt, die Freiläufe werden nicht wahlweise in Betrieb genommen, sondern befinden sich in stetiger Drehbewegung. Erfindungsgemäß erfolgt die Wahl zwischen der Vorwärtsbewegung und dem Rückwärtsgang dadurch, daß die Kupplungseinrichtung betätigt wird, welche weiterhin so ausgebildet ist, daß auch ein Leerlauf möglich ist, bei welchem beispielsweise der Rollstuhl frei verschoben werden kann. Es ist erfindungsgemäß wichtig, daß somit sämtliche Freiläufe gleichzeitig, das heißt zugleich angetrieben oder in Drehung versetzt werden, während durch die Kupplungseinrichtung vorbestimmt wird, welcher der Freiläufe sich jeweils in Antriebsverbindung befindet. Die Wahl der Bewegungsrichtung erfolgt somit durch Betätigung der Kupplungseinrichtung. Dies ermöglicht es, daß erfindungsgemäße Getriebe besonders klein und platzsparend auszugestalten, da jeweils lediglich die Kraftübertragungslinie durch die Kupplungseinrichtung eingerichtet werden muß, nicht jedoch komplizierte Umschaltvorgänge o. ä., beispielsweise unter Verwendung von Zahnrädern, erforderlich sind.

Das erfindungsgemäße Prinzip gestattet es somit, sowohl den Hin- als auch den Rückhub des Betätigungshebels für die Vorwärtsbewegung zu verwenden. Da im Rückwärtsgang üblicherweise nicht oder nicht so schnell gefahren wird, genügt es, im Rückwärtsgang nur einen der beiden Hübe auszunutzen. Durch einfachste Erweiterung des Getriebes mit einem zweiten Rückwärtsgang-Freilauf ist jedoch auch eine der Vorwärtsbewegung entsprechende Rückwärts-Antriebseinrichtung verwirklichbar, ohne daß hierdurch die Grundkonstruktion des Getriebes geändert werden müßte.

Es ist weiter bevorzugt, den Antriebshebel des Getriebes über einen offenen und einen gekreuzten Seiltrieb auf die Freiläufe zu verbinden, um diese stets gegenläufig zueinander anzutreiben. Weiterhin kann der Antriebshebel durch Verschieben zu seinem Drehpunkt hin zur Bremsbetätigung und durch Drehen um seine Längsachse zur Lenkung ausgenutzt werden. Auch wird durch eine Verbindung der Schaltstange und der Lenkstange dafür gesorgt, daß im Vor- und Rückwärtsgang die Zwangslenkung und im Leerlauf die Selbstlenkung des muskelbetriebenen Fahrzeugs wirksam wird.

Weiter bevorzugte Ausführungsformen der Erfindung sind in den Ansprüchen enthalten. Der Schutzumfang erstreckt sich nicht nur auf die beanspruchten Einzelmerkmale, sondern auch auf deren Kombination.

Auf der Zeichnung ist ein Ausführungsbeispiel der Erfindung dargestellt und nachfolgend näher beschrieben. Es zeigen:

Fig.1    einen senkrechten Halbschnitt des Getriebes mit Radnabe und Freiläufen;

Fig.2    eine Seitenansicht des Antriebshebels mit Verbindung zum Getriebe;

Fig.3    eine schematische Seitenansicht der Schaltstange in Leerlaufstellung mit freigegebenem Lenkrad;

Fig.4    eine Draufsicht der Verbindung zwischen Lenkstange und Lenkradgabel und

Fig.5    eine schematische Seitenansicht der Schaltstange mit in die Lenkradgabel eingerasteter Lenkstange.

Ein Getriebe 10 ist auf einer Steckachse 11 eines Fahrzeuges, beispielsweise eines Rollstuhles, mittels Wälzlagern 13, 14 auf einer Hohlwelle 12 drehbar gelagert. An dieser Hohlwelle 12 ist eine Radnabe 15 durch Schrauben 16 o.dgl. befestigt, wobei an der Radnabe 15 in üblicher Weise die Speichen (nicht dargestellt) für eine Radfelge 17 eines muskelbetriebenen Fahrzeuges, wie Rollstuhl o.dgl., befestigt sind. Die Radnabe 15 stellt das Abtriebsglied des hier beschriebenen Getriebes 10 dar. Innerhalb der Radnabe 15 befindet sich ein erster Freilauf 18, der durch ein Rad, beispielsweise ein Seilrad 19, angetrieben wird. Daneben ist ein zweiter Freilauf 20 angeordnet, der durch ein zweites Seilrad 21 angetrieben ist. Die Freiläufe 18, 20, sind mit gleichem Drehsinn wirkend montiert, während die beiden Seilräder 19, 21 gegenläufig oszillierend angetrieben werden und für die Vorwärtsbewegung der Radnabe 15 vorgesehen sind.

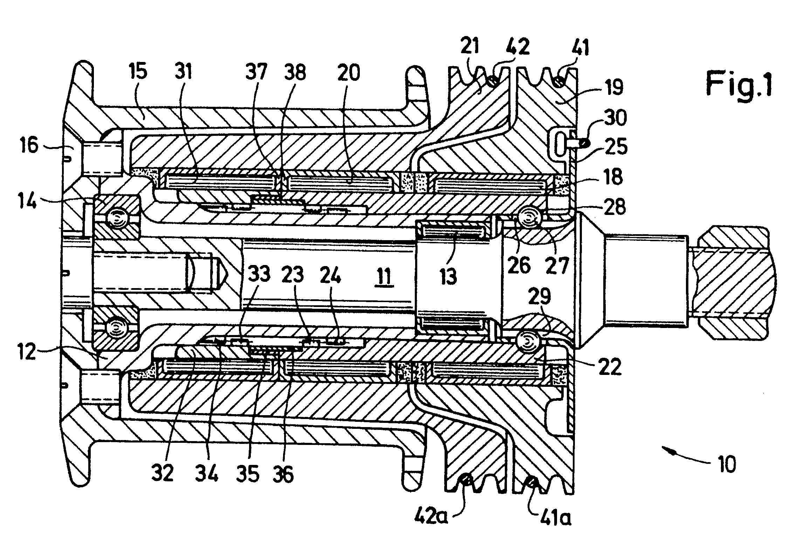

Die Funktion des schaltbaren Leerlaufs wird dadurch erreicht, daß die beiden Freiläufe 18, 20 nicht unmittelbar auf die Welle 12, sondern auf einen Innenring 22 wirken, der als Vorwärtshülse ausgebildet ist. In der in Fig.1 dargestellten Position kann sich die Vorwärtshülse 22 auf der Welle 12 drehen, ohne dieselbe mitzunehmen. Sie befindet sich somit in Leerlaufstellung. Für die Mitnahme der Hohlwelle 12 durch die Vorwärtshülse 22 dienen Kupplungselemente, z.B. die Innenverzahnung 23 der Vorwärtshülse 22, die in eine Außenverzahnung 24 der Welle 12 eingreift, wenn die Vorwärtshülse 22 nach rechts verschoben wird. Dieses kann bewirkt werden durch Drehen einer Schalthülse 25 auf der Steckachse 11, da sie auf ihrem Umfang drei oder mehr axial schräg verlaufende Schlitze 26 besitzt, in denen Kugeln 27 laufen, die außen in der Ringnut 28 der Vorwärtshülse 22 und innen in Längsschlitzen 29 der Steckachse 11 geführt sind. Die Drehung der Schalthülse 25 kann durch die Schaltstange 30 bewirkt werden.

Zur Realisierung des Rückwärtsganges steckt in dem Seilrad 21 außer dem Freilauf 20 noch ein weiterer Freilauf 31, der mit gegenläufigem Drehsinn gegenüber dem Freilauf 20 in dem Seilrad 21 montiert ist. Dieser Freilauf 31 wirkt auf die Rückwärtshülse 32, die sich in der in Fig.1 dargestellten Leerlaufstellung befindet und sich frei auf der Hohlwelle 12 drehen kann. Bei axialer Verschiebung der Rückwärtshülse 32 nach links greift jedoch ihre Innenverzahnung 33 in eine Außenverzahnung 34 der Hohlwelle 12 ein, wodurch der Freilauf 31 die Hohlwelle 12 drehen kann, und zwar mit rückwärtigem Drehsinn. Der in die Rückwärtshülse 32 fest eingepreßte Haltering 35 sorgt im Zusammenwirken mit einem fest in die Vorwärtshülse 22 (Innenring) eingepreßten Flanschring 36 dafür, daß die Rückwärtshülse 32 an der Axialverschiebung der Vorwärtshülse 22 teilnehmen, aber sich unabhängig von ihr drehen kann. Bei der axialen Verschiebung nach rechts (Vorwärtsgang) gerät die Rückwärtshülse 32 etwas in den "falschen" Freilauf 20. Dem wird durch eine Fase 37 der Rückwärtshülse 32 abgeholfen. Ähnliches gilt für eine Fase 38 der Vorwärtshülse 22.

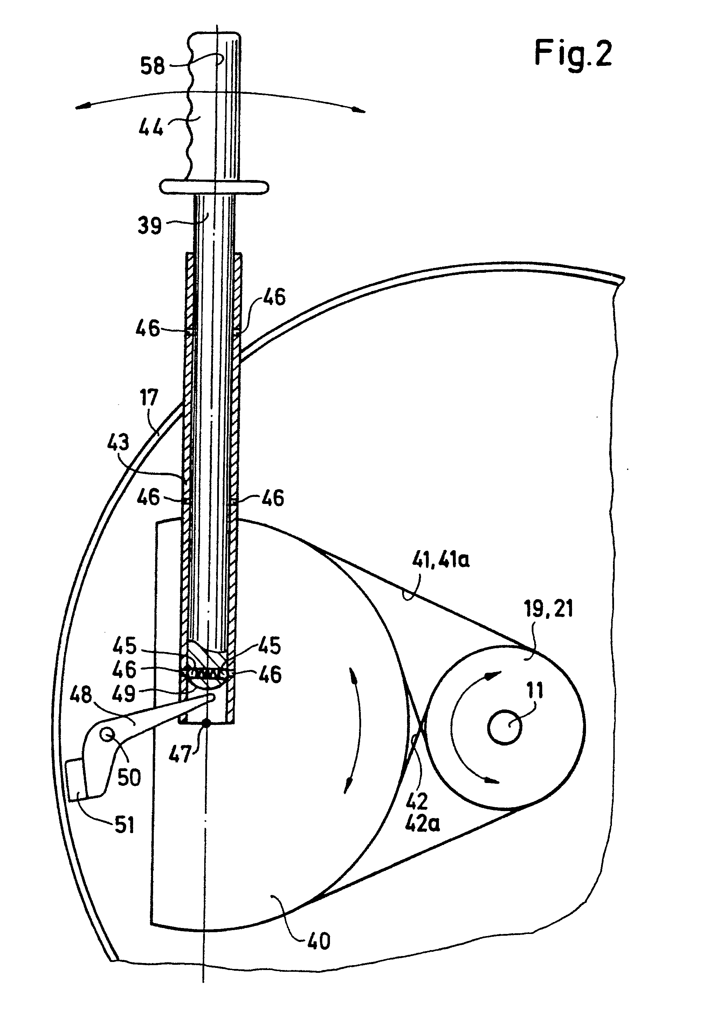

Der Rückwärtsgang, der durch den Freilauf 31 vorgesehen ist, ist nur einfachwirkend ausgebildet, der nur im Zug- oder Druckhub eines Antriebshebels 39, siehe Fig.2, wirksam ist. Dieses ist angesichts der selteneren Benutzung des Rückwärtsganges ausreichend. Für einen doppeltwirkenden Rückwärtsgang mußte ein weiterer, vierter Freilauf in das Seilrad 19 eingesetzt werden. Wie Fig.1 zeigt, sind der doppeltwirkende Vorwärtsgang, der einfachwirkende Rückwärtsgang und der Leerlauf einschließlich des Schaltmechanismus sehr klein in den Abmessungen und damit gewichtssparend in der Radnabe 15 untergebracht. Die im wesentlichen aus der Breite der drei Freiläufe 18, 20, 31 resultierende Breite des Getriebes 10 führt zu einem Flanschabstand der Radnabe 15, der demjenigen üblicher Radfelgen 17 von muskelbetriebenen Fahrzeugen entspricht.

Nach dem eingangs geschilderten Getriebeprinzip müssen die Seilräder 19, 21 stets gegenläufig oszillierend angetrieben werden. Würden sie in Zahnrädern enden, könnten sie mit einer Doppelzahnstange angetrieben werden. Würden sie in Hebeln enden, könnten sie mit je einer Schubstange angetrieben werden. Auch Zahnrad-, Ketten- oder Riementriebe sind möglich. Noch leichter, platzsparender und kostengünstiger sind Seiltriebe, wie sie in Fig.2 dargestellt sind. Während das eine Seilrad 19 als Umschlingungstrieb mit einem größeren Teilkreisrad 40 verbunden ist, wirkt das davor liegende Seilrad 21 mit gekreuztem Umschlingungstrieb auf das größer ausgebildete Teilkreisrad 40 ein. Hierdurch drehen sich die Seilräder 19, 21 mit jeder hin- und hergehenden Bewegung des größeren Teilkreisrades 40 stets gegenläufg zueinander. Die für den jeweiligen Anwendungsfall, z.B. Rollstuhlantrieb, zweckmäßige Grundübersetzung wird durch das Durchmesserverhältnis der kleinen Seilräder 19, 21 zum größeren Teilkreisrad 40 herausgestellt. Andere Übersetzungen lassen sich leicht durch andere Durchmesser des Teilkreisrades 40 realisieren, und zwar ohne Eingriff in das Getriebe 10 nach Fig.1. Da alle Seilräder 19, 21, 40 nur oszillierende Bewegungen machen, sind die Enden der Seile 41, 41a, 42, 42a formschlüssig am Teilkreisrad 40 und an den Seilrädern 19, 21 befestigt.

Am größeren Teilkreisrad 40 ist eine rohrförmige Antriebshülse 43 befestigt, in der ein Antriebshebel 39 mit Handgriff 44 herausziehbar lagert. Abgefederte Kugeln 45 im Antriebshebel 39 können in Verbindung mit Löchern 46 in der Antriebshülse 35 für eine bestimmte Hebellänge sorgen und sozusagen den 1., 2. und 3.Gang markieren. Unter der Voraussetzung konstanter Bogenlänge und Betätigungsfrequenz am Antriebshebel 39 stellt dieses Ändern der Hebellänge eine echte Gangschaltung dar, nämlich bei längerem Hebel ein größeres Drehmoment bei kleinerer Geschwindigkeit.

Wegen des genannten Durchmesserverhältnisses der Seilräder 19, 21 sowie des Teilkreisrades 40 und wegen des Mindestkrümmungsradius der Seile 41, 41a, 42, 42a liegt der Drehpunkt 47 des Teilkreisrades 40 in der Nähe der Radfelge 17, die mit der Radnabe 15 durch Speichen verbunden ist und sich somit um die Steckachse 11 dreht. Dieser Umstand wird in der weiteren Ausgestaltung des Getriebes genutzt, um mit dem Handgriff 44 eine Bremse zu betätigen, die unabhängig von der Winkelstellung des Teilkreisrades 40 und ihres Antriebshebel 39 ist. Dies wird dadurch erreicht, daß sich die Spitze des Bremshebels 48 in der Nähe des Drehpunktes 47 des Teilkreisrades 40 befindet und durch Verschieben des Antriebshebels 39 mit seiner Stirnfläche 49 so um die Achse 50 verdreht werden kann, daß der Bremsbelag durch Herunterdrücken des Handgriffs 44 mit mehr oder weniger Kraft an die Radfelge 17 gedrückt werden kann. Hierbei erfolgt ein radialer Druck auf die Radfelge 17. Mit größerem Aufwand läßt sich statt dessen auch ein axialer Druck auf die Radfelge 17 realisieren.

Eine weitere Vervollkommnung des Getriebes bezieht sich auf die Betätigung der Schalthülse 25 durch die Schaltstange 30. Da bei der in Fig.1 dargestellten Bauart Synchronisationsmittel für die Verzahnungen 23, 24 sowie 33, 34 fehlen, können beim Schalten deren Stirnseiten aufeinanderstoßen, so daß kein Eingriff stattfindet. Bei langsamer Relativbewegung der Verzahnungen müßte mit Gefühl geschaltet werden, um die Zähne in die Zahnlücken gelangen zu lassen.

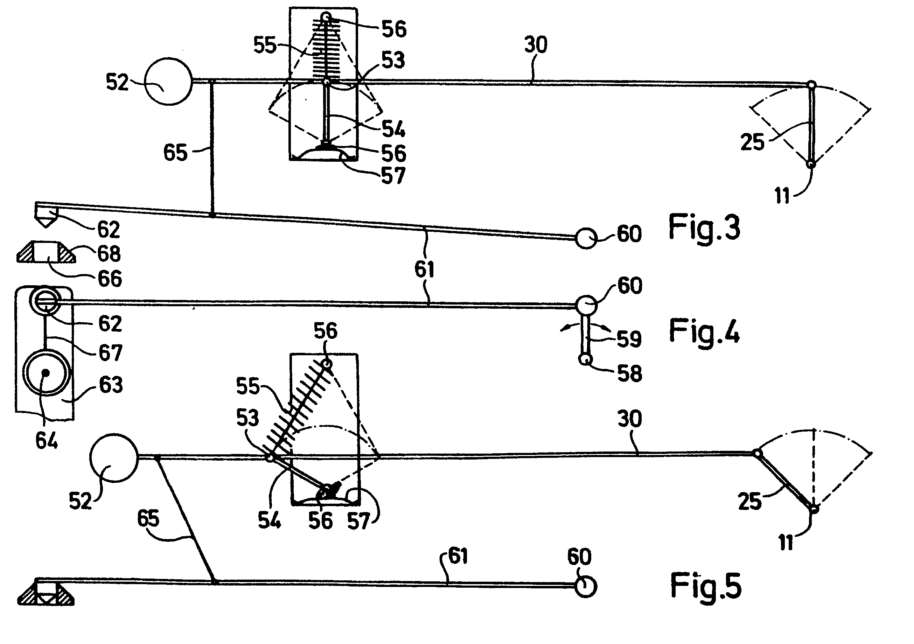

Vorteilhafter ist eine Vorwahl der Gänge mittels eines Kippschalters, der in Fig.3 und 5 dargestellt ist. In Fig.3 steht die Schalthülse 25 in Leerlaufstellung. Zur bequemen Betätigung ist die Schaltstange 30 mit einem Kugelgriff 52 ausgestattet. In einem Gelenk 53 an der Schaltstange 30 sind ein Kipphebel 54 und eine Druckfeder 55 gelagert, die ihrerseits an dem ortsfesten Drehpunkt 56 sich abstützt. Da in Fig.3 die Wirkungslinien des Kipphebels 54 und der Druckfeder 55 fluchten, befindet sich das System in metastabilem Gleichgewicht. Nach leichtem Ziehen am Kugelgriff 52 nach links, siehe Fig.5, drückt die Druckfeder 55 weiter nach links und zieht den Kipphebel 54, die Schaltstange 30 und die Schalthülse 25 mit sich. Wenn hierbei die Verzahnungen 23, 24 aufeinanderstoßen, wird zwar die in Fig.5 skizzierte Position nicht gleich erreicht, aber nach geringer Relativbewegung der Verzahnungen 23, 24 kommt deren Eingriff unter dem Einfluß der Druckfeder 55 selbsttätig zustande, ohne daß der Kugelgriff 52 nachbetätigt werden müßte. Ähnlich funktioniert auch die Vorwahl des Rückwärtsganges: Durch Drücken des Kugelgriffes 52 über die in Fig.3 dargestellte Position nach rechts schnappt die Druckfeder 55 weiter nach rechts, so daß die Schalthülse 25 über die Schaltstange 30 in Rückwärtspostion gedrückt wird. Auch hierbei kommt der Eingriff der Verzahnungen 33, 34 selbsttätig zustande. Eine zusätzliche Sicherung des metastabilen Gleichgewichts für die Leerlaufstellung nach Fig.3 kann z.B. durch eine Blattfeder 57 erfolgen.

Wenn das hier beschriebene Getriebe 10 für einen normalen Rollstuhl verwendet wird, dann dient die in Fig.3 skizzierte Leerlaufstellung dazu, daß dieser Rollstuhl wie üblich mittels seiner Greifreifen gefahren werden kann, weil das Getriebe 10 wegen fehlenden Zahneingriffs abgeschaltet ist. Der Antriebshebel 39 kann hierbei in eine die Greifreifenbetätigung nicht störende Position geschwenkt werden. Das Fahren mittels Greifreifen eignet sich besonders für das Fahren im Zimmer und auf engem Raum. Hierbei können sich die Lenkräder des Rollstuhls selbsttätig um 360° drehen. Für das Fahren im Freien ist aber der Rollstuhlantrieb über Handhebel wesentlich geeigneter. Bei zu befahrenden Strecken, die quer zur Fahrtrichtung geneigt sind, kann jedoch die Lenkung problematisch sein. Die Lenkräder, die sich dann talabwärts einstellen, werden vorteilhafterweise über die Antriebshülse 43 zwangsgelenkt, die an dem größeren Teilkreisrad 40 um die Längsachse 58 drehbar befestigt ist, siehe Fig.2. Durch den an der Antriebshülse 43 in Höhe des Drehpunktes 47 befestigten Ausleger 59, siehe Fig.4, wird über ein Kugelgelenk 60 und eine Lenkstange 61 durch deren Bolzen 62 die Lenkradgabel 63 um ihre Drehachse 64 gedreht und zwar durch Drehen des Handgriffes 44. Diese Art der Lenkung ist aber nur bei eingeschaltetem Vorwärts- oder Rückwartsgang wünschenswert. Deshalb kann die Lenkstange 61 von der Lenkradgabel 63 getrennt werden, siehe Fig.3, und zwar bewirkt durch eine z.B. seilartige mechanische Verbindung 65 zwischen der Lenkstange 61 und der Schaltstange 30, indem der Kipphebel 54 die Schaltstange 30 bei Leerlaufstellung in eine höhere Position bringt, wodurch die Lenkstange 61 ebenfalls angehoben wird, so daß sich ihr Bolzen 62 vom Loch 66 der Lenkradgabel 63 trennt. Beim Drücken des Kugelgriffs 52 in den Vor- oder Rückwärtsgang senkt sich die Schaltstange 30 und mit ihr die Lenkstange 61 so, daß ihr Bolzen 62 in das Loch 66 der Lenkradgabel 63 eintauchen kann. Allerdings kann sich die Lenkradgabel 63 um ihre Drehachse 64 gedreht haben, so daß der Bolzen 62 ins Leere taucht. Deshalb ist das bolzenseitige Ende der Lenkradstange 61 durch den Doppelring 67 drehbar um die Drehachse 64 gefesselt und die Lenkradgabel 63 ist mit Schrägen 68 versehen, die zusammen mit der Spitze des Bolzens 62 beim Drehen der Radgabel 63 ein selbsttätiges Einfädeln des Bolzens 62 in das Loch 66 der Radgabel 63 bewirken. Durch diese Kopplung zwischen Schaltstange 30 und Lenkstange 61 wird mit der Vorwahl des Getriebes 10 in den Vor- oder Rückwärtsgang ohne weiteres Zutun die Umschaltung von Selbstlenkung auf Zwangslenkung und beim Schalten des Getriebes 10 in die Leerlaufstellung die Umschaltung von Zwangslenkung auf Selbstlenkung bewirkt.

**Ansprüche**

1. Getriebe für muskelbetriebene Fahrzeuge oder Geräte zur Umwandlung einer hin- und hergehenden Bewegung in eine Drehbewegung konstanten Drehsinns mit zwei gegenläufig alternierend antreibbaren und gleichsinnig auf eine Welle (12) wirkenden Freiläufen (18,20), dadurch gekennzeichnet, daß mindestens ein dritter Freilauf (31), welcher zu den ersten beiden Freiläufen gegensinnig wirkend ausgebildet ist, zugleich mit den ersten beiden Freiläufen (18,20) angetrieben wird, und daß mittels einer Kupplungseinrichung (23,24,33,34) entweder die gleichsinnigen Freiläufe (18,20) für den Vorwärtsgang, oder der dritte gegensinnige Freilauf (31) für den Rückwärtsgang oder im Leerlauf keiner der drei Freiläufe (18,20, 31) in Antriebsverbindung mit der Welle (12) bringbar sind.

2. Getriebe nach Anspruch 1, dadurch gekennzeichnet, daß auf der Welle (12) der dritte Freilauf (31) für den Rückwärtsgang über eine Verzahnung (33,34) den gegenläufig angetriebenen Freiläufen (18,20) zugeordnet ist und die Verzahnung (33,34) des dritten Freilaufes (31) sowie die Verzahnungen (23,24) der ersten beiden Freiläufe (18,20) über eine Schalthülse (25) mittels einer Schaltstange (30) steuerbar ausgebildet sind.

3. Getriebe nach Anspruch 1 oder 2, dadurch gekennzeichnet, daß die ersten beiden Freiläufe (18,20) auf einem Innenring (22) gelagert und über ein erstes (19) und ein zweites (21) Seilrad gegenläufig mittels einem ersten (41, 41a) bzw. einem zweiten Seil (42, 42a) antreibbar sind, welche mittels eines Teilkreisrades (40) verbunden sind, und daß dem Innenring (22) axial bezüglich der Welle (12) eine Rückwärtshülse (32) zugeordnet ist.

4. Getriebe nach Anspruch 3, dadurch gekennzeichnet, daß die im dritten Freilauf (31) angeordnete Rückwärtshülse (32) mit Innenverzahnungen (33) ausgestattet ist, die in Eingriff mit Außenverzahnungen (34) der Welle (12) für den Antrieb einer Radnabe (15) bringbar und über das zweite Seilrad (21) antreibbar sind.

5. Getriebe nach Anspruch 3 oder 4, dadurch gekennzeichnet, daß der Innenring (22) eine Innenverzahnung (23) aufweist, die mit einer Außenverzahnung (24) der Welle (12) für den Antrieb der Radnabe (15) für die Vorwärtsbewegung verbindbar ist und bei Nichteingriff aller Verzahnungen (23,24,33,34) der Leerlauf ermöglicht wird.

6. Getriebe nach einem der Ansprüche 3 - 5, dadurch gekennzeichnet, daß das erste Seilrad (19) mittels des ersten Seiles (41, 41a) und das zweite Seilrad (21) mittels des zweiten, überkreuzten Seiles (42, 42a) und des Teilkreisrades (40) antreibbar sind, daß das Teilkreisrad (40) um einen Drehpunkt (47) über eine daran befestigte Antriebshülse (43) mit einem Antriebshebel (39) hin- und herbewegbar ausgebildet ist und daß die Enden der Seile (41,41a,42,42a) an den Seilrädern (19,21) und dem Teilkreisrad (40) formschlüssig befestigt sind.

7. Getriebe nach einem der Ansprüche 2 - 6, dadurch gekennzeichnet, daß das Einrasten der Verzahnungen (23,24,33, 34) durch axiales Verschieben des Innenringes (22) mittels der damit verbundenen Schalthülse (25) erfolgt, welche axial schräg verlaufende Schlitze (26) aufweist, in denen jeweils eine Kugel (27) lagert, die einerseits in axial verlaufenden Längsschlitzen (29) der Steckachse (11) und andererseits in eine Ringnut (28) des Innenringes (22) eingreift und geführt ist.

8. Getriebe nach Anspruch 7, dadurch gekennzeichnet, daß die Schalthülse (25) mit der Schaltstange (30) verbunden ist und um die Steckachse (11) drehbar gelagert ist, wobei mittels der axial schräg verlaufenden Schlitze (26) der Schalthülse (25) der Innenring (22) zur Einrastung der Verzahnungen (23,24,33,34) axial verschiebbar ist.

9. Getriebe nach einem der Ansprüche 2 - 8, dadurch gekennzeichnet, daß die Schaltstange (30) an ihrem der Schalthülse (25) abgewendeten Ende einen Kugelgriff (52) aufweist, in dessen Bereich die Schaltstange (30) über ein Gelenk (52) mit einer Druckfeder (55) und einem Kipphebel (54) verbunden ist, wobei in Leerlaufstellung des Getriebes (10) die Druckfeder (55) mit dem Kipphebel (54) eine senkrechte Achse bildet.

10. Getriebe nach Anspruch 9, dadurch gekennzeichnet, daß die Verschiebebewegung der Schaltstange (30) mittels der Druckfeder (55) die Einrastung der Verzahnungen (23,24, 33,34) für den Vorwärts- oder Rückwärtsgang unterstützt, wobei die Schaltstange (30) über eine Verbindung (65) mit einer Lenkstange (61) zur lösbaren Verbindung mit einer Lenkradgabel (63) verbunden ist.

11. Getriebe nach einem der Ansprüche 6 - 10, dadurch gekennzeichnet, daß mittels des in der Antriebshülse (43) geführten Antriebshebels (39) durch senkrechtes Verschieben ein Bremshebel (48) betätigbar ist, dessen Bremsbelag (51) auf eine Felge (17) der Radnabe (15) einwirkt und der Antriebshebel (39) in Höhe des Drehpunktes (47) einen Ausleger (59) aufweist, der zum Drehen des Antriebshebels (39) um seine Achse (58) die Lenkstange (61) zur Festlegung mit der Lenkradgabel (63) schwenkt.

## Claims

1. Gear for muscle-operated vehicles or equipment for converting a reciprocating movement in to a rotary movement with a constant rotation direction with two oppositely, alternately drivable freewheels (18,20) acting in the same direction on a shaft, characterized in that at least one third freewheel (31), which is constructed so as to act in the opposite direction to the first two freewheels (18,20) is driven at the same time as the latter, and that by means of a coupling mechanism (23,24,33,34) either the freewheels (18,20) rotating in the same direction for the forward gear, or the third contrarotating freewheel (31) for the reverse gear or, when idling, none of the three freewheels (18,20,31) can be brought into driving connection with the shaft (12).

2. Gear according to claim 1, characterized in that on the shaft (12), the third freewheel (31) for the reverse gear is associated via a tooth system (33,34) with the two oppositely driven freewheels (18,20) and the tooth system (33,34) of the third freewheel (31) and the tooth systems, (23,24) of the first tooth freewheels (18,20), via a gearshift bush (25), are constructed in controllable manner by means of a gear shift bar.

3. Gear according to claims 1 or 2, characterized in that the first two freewheels (18,20) are mounted on an inner ring (22) and can be driven in opposite directions via a first cable wheel (19) and a second cable wheel (21) by means of a first cable (41,41a) or a second cable (42,42a), which are connected by means of a pitch circle wheel (40) and that, in axial manner with respect to the shaft (12), a reverse bush (32) is associated with the inner ring (22).

4. Gear according to cliam 3, characterized in that the reverse bush (32) located in the third freewheel (31) is provided with internal tooth systems (33), which can be engaged with external tooth systems (34) of the shaft (12) for driving a wheel hub (15) are are drivable via the second cable wheel (21).

5. Gear according to claims 3 or 4, characterized in that the inner ring (22) has an internal tooth system (23), which can be connected to an external tooth system (24) of the shaft (12) for driving the wheel hub (15) for the forward movement and idling is possible when all the tooth systems (23,24,33,34) are not engaged.

6. Gear according to one of the claims 3 to 5, characterized in that the first cable wheel (19) is drivable by means of the first cable (41,41a) and the second cable wheel (21) by means of the second crossed cable (42,42a) and the pitch circle wheel (40), that the latter is constructed so as to reciprocate about a fulcrum (47) by means of a driving sleeve (43) fixed thereto and having a driving lever (39) and that the ends of the cables (41,41a,42,42a) are positively fixed to the cable wheels (19,21) and the pitch circle wheel (40).

7. Gear according to one of the claims 2 to 6, characterized in that the locking of the tooth systems (23,24,33,34) is brought about by axial displacement of the inner ring (22) by means of the gear shift bush (25) connected thereto, which has axially sloping slots (26), in each of which is mounted a ball (27), which on the one hand engages and is guided in axially directed longitudinal slots (29) of the floating axle (11) and on the other hand in a circular groove (28) of the inner ring (22).

8. Gear according to claim 7, characterized in that the gear shift bush (25) is connected to the gear shift bar (30) and mounted in rotary manner about the floating axle (11) and by means of the axially sloping slots (26) of the gear shift bush (25), the inner ring (22) is axially displaceable for the locking of the tooth systems (23,24,33,34).

9. Gear according to one of the claims 2 to 8, characterized in that at its end remote from the gear shift bush (25), the gear shift bar (30) has a ball handle (52), in the vicinity of which the gear shift bar (30) is connected by means of a joint (52) to a compression spring (55) and a rocker arm (54) and when the gear (10) is in the idling position the compression spring (55) forms with the rocker arm (54) a vertical axis.

10. Gear according to claim 9, characterized in that the displacement movement of the gear shift bar (30) supports by means of the compression spring (55) the locking of the tooth systems (23,24,33,34) for the forward or reverse gear, the gear shift bar (30) being connected via a connection (65) to a steering rod (61) for detachable connection to a steering wheel fork (63).

11. Gear according to one of the claims 6 to 10, characterized in that, by vertical displacement, by means of the driving lever (39) guided in the driving sleeve (43) a brake lever (48) can be operated and its brake lining (51) acts on a rim (17) of the wheel hub (15) and level with the fulcrum (47) the driving lever (39) has an arm (59), which for rotating the driving lever (39) about its axis (58) pivots the steering rod (61) for fixing with the steering wheel fork (63).

**Revendications**

1. Engrenage pour véhicules ou appareils à commande musculaire, destiné à transformer un mouvement en va-et-vient en une rotation de sens constant avec deux roues libres (18, 20) entraînées en alternance en sens contraire et agissant dans le même sens sur un arbre (12), caractérisé en ce qu'une troisième roue libre (31) au moins qui est conçue de manière à agir dans le sens contraire aux deux premières roues libres, est entraînée en même temps que les deux premières roues libres (18, 20) et en ce qu au moyen d'un dispositif d'accouplement (23, 24, 33, 34) les roues libres (18, 20), de même sens pour la marche avant ou la troisième roue libre (31) de sens contraire pour la marche arrière, peuvent être amenées en prise active avec l'arbre (12), en marche à vide, aucune des trois roues libres (18, 20, 31) n'est en prise avec l'arbre (2).

2. Engrenage selon la revendication 1, caractérisé en ce que sur l'arbre (12), la troisième roue libre (31) pour la marche arrière est en liaison avec les roues libres (18, 20) entraînées en sens contraire, par l'intermédiaire d'une denture (33, 34) et cette denture (33, 34) de la troisième roue libre (31) ainsi que les dentures (23, 24) des deux premières roues libres (18, 20) peuvent être commandées par l'intermédiaire d'un manchon de manoeuvre (25), au moyen d'une tringle de manoeuvre (30).

3. Engrenage selon la revendication 1 ou 2, caractérisé en ce que les deux premières roues libres (18, 20) sont montées sur une bague intérieure (22) et peuvent être entraînées en sens contraire, par l'intermédiaire d'une première poulie à câble (19) et d'une deuxième poulie à câble (21), au moyen d'un premier câble (41, 41a) ou d'un deuxième câble (42, 42a) lesquels sont reliés au moyen d'une roue à cercle primitif (40) et en ce qu'à la bague intérieure (22) est associé, axialement par rapport à l'arbre (12), un manchon arrière (32).

4. Engrenage selon la revendication 3, caractérisé en ce que le manchon arrière (32) placé dans la troisième roue libre (31) est muni de dentures intérieures (33) qui peuvent être amenées en prise avec les dentures extérieures (34) de l'arbre (12) pour l'entraînement d'un moyeu de roue (15) et qui peuvent être entraînées par la deuxième poulie à câble (21).

5. Engrenage selon la revendication 3 ou 4, caractérisé en ce que la bague intérieure (22) présente une denture intérieure (23) qui peut être reliée à une denture extérieure (24) de l'arbre (12) pour l'entraînement du moyeu de roue (15) pour la marche avant, et en ce que la marche à vide est rendue possible par le désengrènement de toutes les dentures (23, 24, 33, 34).

6. Engrenage selon l'une des revendications 3 à 5, caractérisé en ce que la première poulie à câble (19) peut être entraînée au moyen du premier câble (41, 41a) et la deuxième poulie à câble (21) au moyen du deuxième câble (42, 42a) que croise le premier, et de la roue à cercle primitif (40), en ce que cette dernière (40) est conçue de manière à se déplacer dans un mouvement de va-et-vient avec un levier d'entraînement (39), autour d'un point de rotation (47), par l'intermédiaire d'un manchon d'entraînement (43) placé sur cette roue et en ce que les extrémités des câbles (41, 41a, 42, 42a) sont fixées par concordance de forme sur les poulies à câble (19, 21) et sur la roue à cercle primitif (40).

7. Engrenage selon l'une de revendications 2 à 6, caractérisé en ce que l'engrènement des dentures (23, 24, 33, 34) s'effectue par déplacement axial de la bague intérieure (22) au moyen du manchon de manoeuvre (25) relié à celle-ci, lequel présente des fentes (26) obliques axialement dans lesquelles est montée une sphère (27) qui s'engage et est guidée d'une part dans des fentes longitudinales (29), s'étendant axialement, de l'axe d'emboîtement (11) et d'autre part dans une rainure annulaire (28) de la bague intérieure (22).

8. Engrenage selon la revendication 7, caractérisé en ce que le manchon de manoeuvre (25) est relié à la tringle de manoeuvre (30) et est monté tournant autour de l'axe d'emboîtement (11), la bague intérieure (22) pouvant être déplacée axialement au moyen des fentes (26) obliques axialement du manchon de manoeuvre (25), en vue de l'engrènement des dentures (23, 24, 33, 34).

9. Engrenage selon l'une des revendications 2 à 8, caractérisé en ce que la tringle de manoeuvre (30) présente sur son extrémité opposée au manchon de manoeuvre (25), une poignée sphérique (52) près de laquelle la tringle de manoeuvre (30) est reliée à un ressort de pression (55) et à un levier de basculement (54), par l'intermédiaire d'une articulation (53), en position de marche à vide de l'engrenage (10), le ressort de pression (55) formant avec le levier de basculement (54) un axe vertical.

10. Engrenage selon la revendication 9, caractérisé en ce que le coulissement de la tringle de manoeuvre (30) au moyen du ressort de pression (55) facilite l'engrènement des dentures (23, 24, 33, 34) pour la marche avant ou la marche arrière, la tringle de manoeuvre (30) étant reliée à une tringle de direction (61), par l'intermédiaire d'une liaison (65), en vue de la liaison amovible avec une fourche de roue de direction (63).

11. Engrenage selon l'une des revendications 6 à 10, caractérisé en ce qu'au moyen du levier d'entraînement (39) guidé dans le manchon d'entraînement (43), il est possible d'actionner par déplacement vertical, un levier de frein (48) dont la garniture de frein (51) agit sur une jante (17) du moyeu de roue (15) et en ce que le levier d'entraînement (39) présente à hauteur du point de rotation (47), un bras (59) qui, pour faire tourner le levier d'entraînement (39) autour de son axe (58), fait pivoter la tringle de direction (61) en vue de la fixation avec la fourche de roue de direction (63).

Fig.1

Fig.2

Fig.3

Fig.4

Fig.5